# EUROPÄISCHE PATENTSCHRIFT

(11) **EP 2 935 952 B1**
(45) Veröffentlichungstag und Bekanntmachung des Hinweises auf die Patenterteilung: **08.11.2017**
(21) Anmeldenummer: 13795219.8
(22) Anmeldetag: 21.11.2013
(51) Int. Cl.: F16J 15/3236, F16J 15/3212

(54) **DICHTRING FÜR EIN DRUCKREGELVENTIL**
SEALING RING FOR A PRESSURE CONTROL VALVE
BAGUE D'ÉTANCHÉITÉ POUR UNE SOUPAPE DE RÉGULATION DE PRESSION

(30) Priorität: 19.12.2012 DE 102012112593
(43) Veröffentlichungstag der Anmeldung: 28.10.2015
(73) Patentinhaber: ElringKlinger AG, 72581 Dettingen (DE)
(72) Erfinder: GRAU, Günter, 74321 Bietigheim-Bissingen (DE); MAIER, Martin, 74379 Ingersheim (DE); CANKAR, Mehmet, 71560 Sulzbach (DE)
(74) Vertreter: Hoeger, Stellrecht & Partner Patentanwälte mbB
(86) Internationale Anmeldenummer: PCT/EP2013/074358
(87) Internationale Veröffentlichungsnummer: WO 2014/095216

(56) Entgegenhaltungen:
- EP-A1- 2 559 922
- DE-A1- 2 756 482
- DE-T2- 60 129 112
- US-A1- 2006 102 860
- US-A1- 2010 066 032
- US-A1- 2011 272 892

## Beschreibung

Die vorliegende Erfindung betrifft die Verwendung eines Dichtrings in einem Druckregelventil zur Steuerung des Ladedrucks bei einem Verbrennungsmotor mit Turbolader.

Bei Verbrennungsmotoren, insbesondere Otto-Motoren oder Diesel-Motoren in Kraftfahrzeugen, die mit einem Turbolader zur Verdichtung der den Zylindern zugeführten Luft ausgestattet sind, ist der Ladedruck zunächst vom Umgebungsdruck der Luft sowie der Drehzahl des Turboladers abhängig. Um den Ladedruck entsprechend der jeweiligen Leistungsanforderung des Motors steuern zu können, ist üblicherweise ein Druckregelventil vorgesehen. Dieses umfasst einen Ventilkolben, der in einem Ventilzylinder entlang der Zylinderachse verschiebbar angeordnet ist, wobei die Bewegung des Kolbens in dem Zylinder in der Regel über die Beaufschlagung mit einer elektromagnetischen Kraft erfolgt, d.h. es handelt sich um ein Magnetventil.

Bei derartigen Druckregelventilen ist zur Abdichtung des Ventilkolbens gegen den Ventilzylinder ein Dichtring aus einem Kunststoffmaterial vorgesehen, der entweder an dem Zylinder oder an dem Kolben festgelegt ist. Im ersten Fall erfolgt eine dynamische Abdichtung zwischen dem Dichtring und dem Kolben (innere Abdichtung) und im zweiten Fall erfolgt eine dynamische Abdichtung zwischen dem Dichtring und dem Zylinder (äußere Abdichtung). Für eine optimale Funktion des Druckregelventils, insbesondere für eine möglichst exakte Steuerung des Ladedrucks, ist einerseits eine sehr hohe Dichtwirkung des Dichtrings erforderlich und andererseits eine möglichst geringe Reibung an der Gegenfläche, sodass der Kolben mit einer möglichst geringen Verschiebekraft bewegt werden kann.

Die Verwendung eines Dichtrings in einem Druckregelventil zur Steuerung des Ladedrucks in einem Verbrennungsmotor mit Turbolader ist bekannt aus z.B. DE 27 56 482. Bei bekannten Druckregelventilen gemäß dem Stand der Technik werden insbesondere Dichtringe aus Elastomermaterialien eingesetzt. Diese Materialien haben jedoch den Nachteil, dass die Formstabilität der daraus hergestellten Dichtringe sowohl bei sehr niedrigen als auch bei sehr hohen Temperaturen unbefriedigend ist, wodurch Undichtigkeiten auftreten können. Zudem unterliegen Elastomerdichtungen einem relativ hohen Materialverschleiß, was deren Lebensdauer entsprechend verkürzt.

Der vorliegenden Erfindung liegt daher die Aufgabe zugrunde, einen Dichtring für ein Druckregelventil vorzuschlagen, der über einen weiten Temperaturbereich eine zuverlässige Abdichtung ermöglicht bei einer gleichzeitig geringen Reibung an der dynamischen Dichtfläche.

Diese Aufgabe wird durch die Merkmale des Anspruchs 1 gelöst. Der erfindungsgemäße Dichtring umfasst demnach zwei Komponenten, wobei die erste Komponente, der eigentliche Dichtungskörper, aus einem Material gebildet ist, das sich durch eine hohe thermische und chemische Beständigkeit sowie einen geringen Reibungskoeffizienten auszeichnet. Der oder die vollfluorierten thermoplastischen Kunststoffe sind dabei schmelzverarbeitbar, was weiter unten noch im Einzelnen beschrieben wird. Es hat sich gezeigt, dass ein Dichtungskörper aus derartigen Materialien eine gute Formstabilität und damit eine gleichbleibende Dichtungswirkung über einen weiten Temperaturbereich von etwa -40 bis 180 °C aufweist, womit sowohl ein Kaltstart des Motors bei extrem niedrigen Außentemperaturen als auch die maximale Betriebstemperatur des Druckregelventils abgedeckt sind. Die Materialien sind des Weiteren sehr beständig gegen die Einwirkung von Kraftstoffen, Motoröl (Blow by) usw.

Gemäß der oben beschriebenen Geometrie des Dichtungskörpers bilden die beiden Dichtlippen eine Nut, in der das entsprechend geformte Federelement aus Stahl als zweite Komponente des erfindungsgemäßen Dichtrings formschlüssig aufgenommen ist. In der Einbausituation des Dichtrings steht das Federelement unter radialer Spannung und drückt die beiden Dichtlippen an die jeweiligen Gegenflächen des Kolbens und des Zylinders des Druckregelventils, wobei der Dichtungskörper und das Federelement günstigerweise so ausgelegt und aufeinander abgestimmt sind, dass die Pressung der Dichtlippen an die Gegenflächen im Wesentlichen nur auf das Federelement zurückgeht und nicht auf eine Eigenspannung des Dichtungskörpers aufgrund des Memory-Effektes, wie dies bei Dichtungen aus vollfluorierten thermoplastischen Kunststoffen sonst häufig der Fall ist. Mit anderen Worten ist der Dichtungskörper insbesondere so ausgelegt, dass er ohne das Federelement in der entsprechenden Einbausituation keine Dichtungswirkung aufweisen würde. Es hat sich gezeigt, dass bei dem erfindungsgemäßen Dichtring unter diesen Bedingungen eine sehr niedrige und über einen weiten Temperaturbereich im Wesentlichen konstante Anpresskraft der Dichtlippen an die jeweiligen Gegenflächen erreichen lässt, sodass für die Bewegung des Ventilkolbens in dem Ventilzylinder nur eine geringe Verschiebekraft notwendig ist.

Bei dem erfindungsgemäßen Dichtring weist die der Zylinderachse zugewandte innere Dichtlippe eine der Zylinderachse zugewandte innere Dichtfläche auf und die der Zylinderachse abgewandte äußere Dichtlippe weist eine der Zylinderachse abgewandte äußere Dichtfläche auf. Die Angaben "innen" und "außen" beziehen sich also im Sinne der vorliegenden Erfindung auf die Orientierung in Bezug auf die Zylinderachse, und nicht etwa in Bezug auf die zwischen den beiden Dichtlippen gebildete Nut. Von den beiden Dichtflächen des Dichtungskörpers dient die eine als statische und die andere als dynamische Dichtfläche, je nachdem, ob der Dichtring am Kolben oder am Zylinder des Druckregelventils angeordnet wird. Günstigerweise ist der Dichtungskörper so ausgebildet, dass wahlweise sowohl die innere als auch die äußere Dichtfläche als dynamische Dichtfläche dienen kann, d.h. dass derselbe Dichtring wahlweise als Innendichtung oder als Außendichtung eingesetzt werden kann.

Günstigerweise ist das Querschnittsprofil des Dichtungskörpers so ausgebildet, dass die innere Dichtfläche im Wesentlichen nur entlang einer Linie, die den Innenumfang des Dichtrings definiert, an einer zur Zylinderachse parallelen Gegenfläche anliegt. Dies gilt insbesondere dann, wenn die innere Dichtfläche als dynamische Dichtfläche dient bzw. dienen kann, wobei die Gegenfläche von der Außenseite des Ventilkolbens gebildet wird. Durch eine solche Gestaltung kann die Reibung zwischen dem Dichtkörper und der Gegenfläche minimiert werden.

Das Querschnittsprofil des Dichtkörpers ist des Weiteren günstigerweise so ausgebildet, dass die äußere Dichtfläche im Wesentlichen nur entlang einer Linie, die den Außenumfang des Dichtrings definiert, an einer zur Zylinderachse parallelen Gegenfläche anliegt. Dies gilt insbesondere dann, wenn die äußere Dichtfläche als dynamische Dichtfläche dient bzw. dienen kann, wobei die Gegenfläche von der Innenseite des Ventilzylinders gebildet wird. Wie bereits oben angesprochen, ist es besonders vorteilhaft, wenn sowohl die innere als auch die äußere Dichtfläche des Dichtungskörpers entsprechend konfiguriert sind, sodass der erfindungsgemäße Dichtring sowohl als Innendichtung wie auch als Außendichtung verwendet werden kann.

Zu berücksichtigen ist in diesem Zusammenhang, dass zwar die vorgegebene Geometrie des Dichtungskörpers so ausgebildet werden kann, dass die innere und/oder äußere Dichtfläche jeweils nur entlang einer Linie an der Gegenfläche anliegt. Unter realen Bedingungen in der Einbausituation des Dichtrings führen jedoch bereits geringste Materialverformungen dazu, dass die Anlageflächen nur näherungsweise einer Linie entsprechen, d.h. eine gewisse Breite in Richtung der Zylinderachse aufweisen.

Der Öffnungswinkel zwischen den beiden Dichtlippen kann vorteilhafterweise im Bereich von 0° bis 30° liegen, d.h. die beiden Dichtlippen verlaufen entweder zueinander parallel und genau in Richtung der Zylinderachse, oder sie weiten sich ausgehend von dem Scheitelbereich auf und erstrecken sich nur näherungsweise in Richtung der Zylinderachse. Vorzugsweise liegt der Öffnungswinkel im Bereich von 10° bis 20°.

Die Angaben zum Öffnungswinkel der Dichtlippen beziehen sich insbesondere auf deren einander zugewandte Oberflächen, die günstigerweise eben ausgebildet sind, wobei das an diesen Oberflächen anliegende Federelement dann jeweils denselben Öffnungswinkel aufweist. Die Außenkonturen der Dichtlippen, d.h. die innere und äußere Dichtfläche, können aufgrund ihrer Geometrie von diesem geradlinigen Verlauf abweichen.

Die Winkelhalbierende des Öffnungswinkels verläuft vorzugsweise parallel zur Zylinderachse, d.h. die beiden Dichtlippen sind jeweils um denselben Winkel zur Zylinderachse geneigt.

Die typischen Abmessungen des erfindungsgemäßen Dichtrings orientieren sich an der Größe der eingangs beschriebenen Druckregelventile. Der Dichtungskörper weist bevorzugt einen Innendurchmesser von 20 bis 30 mm, einen Außendurchmesser von 24 bis 36 mm und eine Höhe von 2,5 bis 4 mm (in Richtung der Zylinderachse) auf. Die Höhe des Dichtungskörpers wird im Fall von unterschiedlich langen Dichtlippen durch die längere Dichtlippe bestimmt, wobei es bevorzugt ist, wenn die beiden Dichtlippen dieselbe oder eine ähnliche Länge aufweisen.

Der Dichtungskörper weist erfindungsgemäß eine Materialstärke von 0,15 bis 0,6 mm auf. Die Materialstärke des Dichtungskörpers kann in verschiedenen Bereichen unterschiedlich sein, wobei in den dünnsten Bereichen eine Materialstärke von 0,15 bis 0,3 mm bevorzugt ist.

Das Material des Dichtungskörpers umfasst gemäß der Erfindung als Hauptbestandteil einen oder mehrere vollfluorierte thermoplastische Kunststoffe. Gemäß einer nicht erfindungsgemäßen Ausführungsform handelt es sich hierbei um mindestens einen nicht schmelzverarbeitbaren vollfluorierten Kunststoff, insbesondere um PTFE (homopolymeres Tetrafluorethylen) oder modifiziertes PTFE (mit einem geringen Comonomeranteil). PTFE ist zwar ein thermoplastischer Kunststoff, der jedoch aufgrund seiner extrem hohen Schmelzviskosität nicht schmelzverarbeitbar ist, d.h. insbesondere nicht mittels Spritzguss verarbeitet werden kann. PTFE zeichnet sich durch eine besonders hohe thermische und chemische Beständigkeit aus. Erfindungsgemäß umfasst der Dichtungskörper als Hauptbestandteil mindestens einen schmelzverarbeitbaren vollfluorierten thermoplastischen Kunststoff, insbesondere ein TFE-Copolymer mit einem Comonomeranteil von mehr als 0,5 Gew.%. Durch einen Comonomeranteil in diesem Größenordnungsbereich kann das Molekulargewicht der Polymerketten reduziert werden, ohne dass die mechanische Festigkeit des Materials beeinträchtigt wird, sodass die Schmelzviskosität herabgesetzt und eine Verarbeitung z.B. mittels Spritzguss ermöglicht wird.

Das Comonomer ist bevorzugt ausgewählt aus einem Perfluoralkylvinylether, insbesondere Perfluormethylvinylether, Hexafluorpropylen und Perfluor-(2,2-dimethyl-1,3-dioxol). Je nach Comonomeranteil handelt es sich bei dem vollfluorierten thermoplastischen Kunststoff dann um ein so genanntes schmelzverarbeitbares PTFE (Comonomeranteil bis etwa 3 Gew.%), ein PFA (mehr als etwa 3 Gew.% Perfluoralkylvinylether als Comonomer), ein MFA (mehr als etwa 3 Gew.% Perfluormethylvinylether als Comonomer) oder ein FEP (mehr als etwa 3 Gew.% Hexafluorpropylen als Comonomer).

Das Material des Dichtungskörpers kann als Hauptbestandteil auch eine Mischung aus verschiedenen der vorstehend beschriebenen vollfluorierten thermoplastischen Kunststoffe umfassen.

Das Material des Dichtungskörpers umfasst den oder die Kunststoffe als Hauptbestandteil, d.h. diese machen mehr als die Hälfte des Materials aus. Vorzugsweise umfasst das Material des Dichtungskörpers 75 Gew.% oder mehr des mindestens einen vollfluorierten thermoplastischen Kunststoffs. Der Dichtungskörper kann insbesondere auch im Wesentlich vollständig aus dem mindestens einen vollfluorierten thermoplastischen Kunststoff gebildet sein.

Alternativ kann vorgesehen sein, dass das Material des Dichtungskörpers ferner einen oder mehrere Füllstoffe, insbesondere Pigmente, reibungsvermindernde Additive und/oder die thermische Beständigkeit erhöhende Additive umfasst, wie z.B. Ruß oder Molybdänsulfid.

Abhängig davon, ob das Material des Dichtungskörpers einen schmelzverarbeitbaren vollfluorierten Kunststoff umfasst oder einen nicht schmelzverarbeitbaren, stehen verschiedene Möglichkeiten für die Herstellung des erfindungsgemäßen Dichtrings zur Verfügung. Gemäß einer Ausführungsform der Erfindung ist der Dichtring durch spanabhebende Herstellung des Dichtungskörpers und anschließendes Einsetzen des Federelements hergestellt. Dieses Verfahren ist für alle in Frage kommenden Kunststoffmaterialien möglich, ist jedoch relativ aufwändig.

Daher ist es bevorzugt, wenn der Dichtring durch Umspritzen des Federelements mit dem Material des Dichtungskörpers hergestellt ist. Diese Herstellungsmethode, die nur bei Verwendung von schmelzverarbeitbaren vollfluorierten Kunststoffen möglich ist, erlaubt eine effizientere und somit kostensparende Fertigung des Dichtrings. Zudem hat sie den Vorteil eines optimalen Formschlusses zwischen dem Dichtungskörper und dem Federelement aus Stahl.

Die vorliegende Erfindung betrifft die Verwendung des Dichtrings in einem Druckregelventil zur Steuerung des Ladedrucks bei einem Verbrennungsmotor mit Turbolader. Der Dichtring ist entweder an einem Ventilzylinder oder an einem Ventilkolben des Druckregelventils festgelegt, wobei es sich im ersten Fall um eine innere Abdichtung handelt (innere Dichtfläche ist die dynamische Dichtfläche) und im zweiten Fall um eine äußere Abdichtung (äußere Dichtfläche ist die dynamische Dichtfläche).

Günstigerweise ist bei dem erfindungsgemäßen Druckregelventil der Ventilkolben in dem Ventilzylinder elektromagnetisch bewegbar, d.h. es handelt sich um ein Magnetventil.

Weitere Vorteile und bevorzugte Ausführungsformen des erfindungsgemäßen Druckregelventils wurden bereits im Zusammenhang mit dem erfindungsgemäßen Dichtring beschrieben.

Diese und weitere Vorteile der Erfindung werden anhand des nachfolgenden Ausführungsbeispiels unter Bezugnahme auf die Zeichnung näher erläutert. Es zeigt:

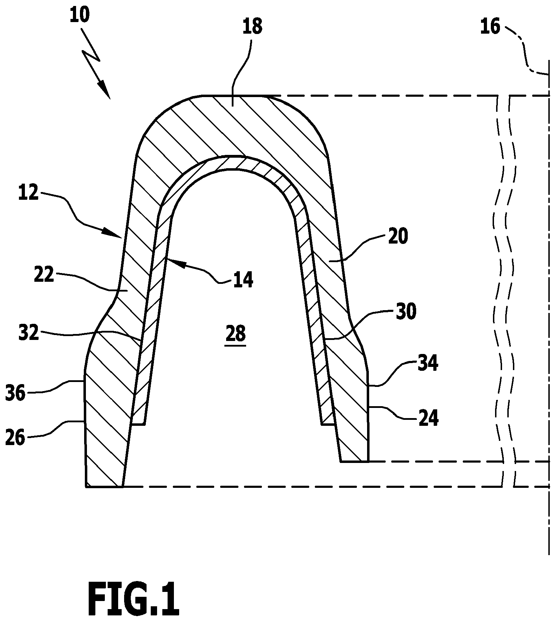

Figur 1: eine schematische Querschnittsdarstellung eines Ausführungsbeispiels eines erfindungsgemäßen Dichtrings.

Die Figur 1 zeigt eine schematische Querschnittsdarstellung eines Ausführungsbeispiels eines erfindungsgemäßen Dichtrings, der als Ganzes mit 10 bezeichnet ist. Der Dichtring 10 umfasst zwei Komponenten, nämlich einen Dichtungskörper 12 aus einem Material mit einem oder mehreren vollfluorierten thermoplastischen Kunststoffen als Hauptbestandteil sowie ein Federelement 14 aus Stahl, wobei beide Komponenten 12 und 14 rotationssymmetrisch in Bezug auf eine Zylinderachse 16 ausgebildet sind.

Der Dichtungskörper 12 weist ein im Wesentlichen U-förmiges Querschnittsprofil auf mit einem Scheitelbereich 18 und zwei Dichtlippen 20 und 22, die sich ausgehend von dem Scheitelbereich 18 mit einem Öffnungswinkel von ca. 15° näherungsweise in Richtung der Zylinderachse 16 erstrecken. Dabei weist die der Zylinderachse 16 zugewandte innere Dichtlippe 20 eine innere Dichtfläche 24 und die der Zylinderachse abgewandte äußere Dichtlippe 22 eine äußere Dichtfläche 26 auf. Wenn der Dichtring 10 in einem Druckregelventil am Ventilzylinder festgelegt ist, dient die äußere Dichtfläche 26 als statische Dichtfläche und die innere Dichtfläche 24 als dynamische Dichtfläche mit der Außenseite des Ventilkolbens als Gegenfläche. Bei einer Festlegung des Dichtrings 10 am Ventilkolben verhält es sich umgekehrt, dann dient die äußere Dichtfläche 26 als dynamische Dichtfläche mit der Innenseite des Ventilzylinders als Gegenfläche. Beide Varianten sind aufgrund der Gestaltung des Dichtrings 10 möglich.

Das Federelement 14 aus Stahl als zweite Komponente des Dichtrings 10 weist ebenfalls ein im Wesentlichen U-förmiges Querschnittsprofil auf und ist in der zwischen den beiden Dichtlippen 20 und 22 gebildeten Nut 28 des Dichtungskörpers 12 formschlüssig aufgenommen, sodass es unmittelbar an den einander zugewandten Oberflächen 30 und 32 der Dichtlippen 20 und 22 anliegt.

Der Dichtungskörper 12 und das Federelement 14 sind so aufeinander abgestimmt, dass in der Einbausituation des Dichtrings 10 lediglich durch das Federelement 14 eine Vorspannung des Dichtrings 10 und eine (möglichst geringe) Anpressung der Dichtlippen 20 und 22 an die jeweiligen Gegenflächen erfolgt. Dabei ist das Querschnittsprofil des Dichtungskörpers 12 so gestaltet, dass im Idealfall sowohl die innere Dichtfläche 24 als auch die äußere Dichtfläche 26 nur entlang einer Linie an der jeweiligen Gegenfläche, die parallel zur Zylinderachse 16 verläuft, anliegt, wobei diese Linie entlang der inneren Dichtfläche 24 den Innenumfang 34 und entlang der äußeren Dichtfläche 26 den Außenumfang 36 des Dichtrings 10 definiert. Dadurch wird im Fall der jeweiligen dynamischen Dichtfläche eine sehr geringe Reibung bei der Bewegung des Ventilkolbens in dem Ventilzylinder entlang der Zylinderachse 16 erreicht, was wiederum eine möglichst exakte Steuerung des Ladedrucks durch das Druckregelventil ermöglicht.

Der in der Figur 1 beispielhaft dargestellte Dichtring 10 weist einen Innendurchmesser von ca. 24 mm, einen Außendurchmesser von ca. 30 mm und eine Höhe entlang der Zylinderachse 16 von ca. 3 mm auf. Die Materialstärke des Dichtungskörpers 12 beträgt im Scheitelbereich 18 ca. 0,5 mm und in den dünnsten Bereichen der Dichtlippen 20 und 22 ca. 0,2 mm.

Der vollfluorierte thermoplastische Kunststoff, aus dem der Dichtungskörper 12 gebildet ist, ist bei diesem Ausführungsbeispiel ein schmelzverarbeitbares PTFE, d.h. ein TFE-Copolymer mit einem Comonomeranteil im Bereich von etwa 0,5 bis 1 Gew.%, wobei das Comonomer insbesondere Perfluorpropylvinylether ist. Die Schmelzverarbeitbarkeit dieses Materials, dessen thermische und chemische Beständigkeit mit derjenigen von homopolymerem PTFE vergleichbar ist, ermöglicht eine effiziente und kostengünstige Herstellung des Dichtrings 10 durch Umspritzen des Federelements 14 mit dem Kunststoffmaterial.

Als Werkstoff für das Federelement 14 wird ein hoch korrosionsbeständiger Stahl eingesetzt, insbesondere Federstahl mit der Werkstoffnummer 1.4310.

Der Dichtring 10 zeichnet sich beim bestimmungsgemäßen Einsatz in einem Druckregelventil zur Steuerung des Ladedrucks bei einem Verbrennungsmotor mit Turbolader insbesondere dadurch aus, dass der Dichtungskörper 12 innerhalb eines weiten Temperaturbereichs von etwa -40 bis 180 °C eine hohe Formstabilität aufweist, und dass durch das Federelement 14 eine im Wesentlichen konstante, relativ geringe Pressung der Dichtlippen 20 und 22 an die jeweiligen Gegenflächen ermöglicht wird, mit einer sehr geringen Reibung aufgrund des vollfluorierten Kunststoffmaterials und der im Idealfall nur linienförmigen Berührung der Dichtflächen 24 und 26. Das vollfluorierte Kunststoffmaterial weist zudem eine hohe chemische Beständigkeit gegen Einflüsse durch den Kraftstoff und das Motoröl auf.

Versuche mit einem Dichtring gemäß dem vorstehend beschriebenen Ausführungsbeispiel und einem Ventilkolben aus Polyoxymethylen (POM) haben ergeben, dass für eine axiale Verschiebung des Kolbens entlang der inneren Dichtfläche des Dichtrings mit 5 mm/min eine Verschiebekraft von weniger als 1 Newton erforderlich ist.

### Bezugszeichenliste

- 10: Dichtring
- 12: Dichtungskörper
- 14: Federelement
- 16: Zylinderachse
- 18: Scheitelbereich
- 20: innere Dichtlippe
- 22: äußere Dichtlippe
- 24: innere Dichtfläche
- 26: äußere Dichtfläche
- 28: Nut
- 30: Oberfläche von 20
- 32: Oberfläche von 22
- 34: Innenumfang von 10
- 36: Außenumfang von 10

## Patentansprüche

1. Verwendung eines Dichtrings (10) in einem Druckregelventil zur Steuerung des Ladedrucks in einem Verbrennungsmotor mit Turbolader, **dadurch gekennzeichnet, dass** der Dichtring (10) folgendes umfasst:
- einen in Bezug auf eine Zylinderachse (16) rotationssymmetrischen Dichtungskörper (12) aus einem Material, das als Hauptbestandteil einen oder mehrere schmelzverarbeitbare vollfluorierte thermoplastische Kunststoffe umfasst, wobei der Dichtungskörper (12) ein im Wesentlichen U-förmiges Querschnittsprofil aufweist mit einem Scheitelbereich (18) und zwei Dichtlippen (20, 22), die sich ausgehend von dem Scheitelbereich (18) zueinander parallel oder mit einem Öffnungswinkel zumindest näherungsweise in Richtung der Zylinderachse (16) erstrecken, und wobei der Dichtungskörper (12) eine Materialstärke von 0,15 bis 0,6 mm aufweist; und
- ein in Bezug auf die Zylinderachse (16) rotationssymmetrisches Federelement (14) aus Stahl mit einem im Wesentlichen U-förmigen Querschnittsprofil, wobei das Federelement (14) zwischen den Dichtlippen (20, 22) des Dichtungskörpers (12) so angeordnet ist, dass es unmittelbar an deren einander zugewandten Oberflächen (30, 32) anliegt.

2. Verwendung nach Anspruch 1, wobei die Pressung der Dichtlippen (20, 22) an Gegenflächen in dem Druckregelventil im Wesentlichen nur auf das Federelement (14) zurückgeht und nicht auf eine Eigenspannung des Dichtungskörpers (12).

3. Verwendung nach Anspruch 1 oder 2, wobei die der Zylinderachse (16) zugewandte innere Dichtlippe (20) eine der Zylinderachse (16) zugewandte innere Dichtfläche (24) aufweist und die der Zylinderachse (16) abgewandte äußere Dichtlippe (22) eine der Zylinderachse (16) abgewandte äußere Dichtfläche (26) aufweist, und wobei in der Einbausituation des Dichtrings (10) die eine Dichtfläche als statische und die andere als dynamische Dichtfläche dient.

4. Verwendung nach Anspruch 3, wobei das Querschnittsprofil des Dichtungskörpers (12) so ausgebildet ist, dass die innere Dichtfläche (24) im Wesentlichen nur entlang einer Linie, die den Innenumfang (34) des Dichtrings (10) definiert, an einer zur Zylinderachse (16) parallelen Gegenfläche anliegt.

5. Verwendung nach Anspruch 3 oder 4, wobei das Querschnittsprofil des Dichtungskörpers (12) so ausgebildet ist, dass die äußere Dichtfläche (26) im Wesentlichen nur entlang einer Linie, die den Außenumfang (36) des Dichtrings (10) definiert, an einer zur Zylinderachse (16) parallelen Gegenfläche anliegt.

6. Verwendung nach einem der vorangehenden Ansprüche, wobei der Öffnungswinkel zwischen den beiden Dichtlippen (20, 22) im Bereich von 0° bis 30° liegt, vorzugsweise im Bereich von 10° bis 20°.

7. Verwendung nach einem der vorangehenden Ansprüche, wobei der Dichtungskörper (12) als Hauptbestandteil ein TFE-Copolymer mit einem Comonomeranteil von mehr als 0,5 Gew.% umfasst, wobei das Comonomer bevorzugt ausgewählt ist aus einem Perfluoralkylvinylether, insbesondere Perfluormethylvinylether, Hexafluorpropylen und Perfluor-(2,2-dimethyl-1,3-dioxol).

8. Verwendung nach Anspruch 7, wobei der schmelzverarbeitbare vollfluorierte thermoplastische Kunststoff ein schmelzverarbeitbares PTFE, ein PFA, ein MFA oder ein FEP ist.

9. Verwendung nach einem der vorangehenden Ansprüche, wobei das Material des Dichtungskörpers (12) 75 Gew.% oder mehr des mindestens einen schmelzverarbeitbaren vollfluorierten thermoplastischen Kunststoffs umfasst, und bevorzugt im Wesentlichen vollständig aus dem mindestens einen schmelzverarbeitbaren vollfluorierten thermoplastischen Kunststoff gebildet ist.

10. Verwendung nach einem der Ansprüche 1 bis 9, wobei das Material des Dichtungskörpers (12) ferner einen oder mehrere Füllstoffe, insbesondere Pigmente, reibungsvermindernde Additive und/oder die thermische Beständigkeit erhöhende Additive umfasst.

11. Verwendung nach einem der vorangehenden Ansprüche, wobei der Dichtring (10) durch spanabhebende Herstellung des Dichtungskörpers (12) und anschließendes Einsetzen des Federelements (14) hergestellt ist.

12. Verwendung nach einem der Ansprüche 1 bis 10, wobei der Dichtring (10) durch Umspritzen des Federelements (14) mit dem Material des Dichtungskörpers (12) hergestellt ist.

13. Verwendung nach einem der vorangehenden Ansprüche, wobei der Dichtring (10) an einem Ventilzylinder oder an einem Ventilkolben des Druckregelventils festgelegt ist.

14. Verwendung nach Anspruch 13, wobei der Ventilkolben in dem Ventilzylinder elektromagnetisch bewegbar ist.

## Claims

1. Use of a sealing ring (10) in a pressure control valve for controlling boost pressure in a combustion engine with turbocharger, **characterized in that** the sealing ring (10) comprises the following:
- a sealing body (12) which is rotationally symmetrical with regard to a cylinder axis (16) and is made from a material which comprises as main constituent one or more melt-processable perfluorinated thermoplastics, wherein the sealing body (12) has a substantially U-shaped cross-sectional profile with an apex region (18) and two sealing lips (20, 22) which, starting from the apex region (18), extend parallel to one another or with an opening angle at least approximately in the direction of the cylinder axis (16), and wherein the sealing body (12) has a material thickness of 0.15 to 0.6 mm; and
- a spring element (14) which is rotationally symmetrical with regard to the cylinder axis (16) and is made of steel with a substantially U-shaped cross-sectional profile, wherein the spring element (14) is arranged between the sealing lips (20, 22) of the sealing body (12) in such a way that it bears directly against the mutually facing surfaces (30, 32) thereof.

2. Use according to claim 1, wherein the pressing of the sealing lips (20, 22) against counter-faces in the pressure control valve originates substantially only from the spring element (14) and not from an internal stress of the sealing body (12).

3. Use according to claim 1 or 2, wherein the inner sealing lip (20) facing the cylinder axis (16) has an inner sealing face (24) facing the cylinder axis (16) and the outer sealing lip (22) remote from the cylinder axis (16) has an outer sealing face (26) remote from the cylinder axis (16), and wherein in the installation situation of the sealing ring (10) one sealing face serves as the static sealing face and the other as the dynamic sealing face.

4. Use according to claim 3, wherein the cross-sectional profile of the sealing body (12) is configured such that the inner sealing face (24) substantially only bears against a counter-face parallel to the cylinder axis (16) along a line which defines the inner circumference (34) of the sealing ring (10).

5. Use according to claim 3 or 4, wherein the cross-sectional profile of the sealing body (12) is configured such that the outer sealing face (26) substantially only bears against a counter-face parallel to the cylinder axis (16) along a line which defines the outer circumference (36) of the sealing ring (10).

6. Use according to one of the preceding claims, wherein the opening angle between the two sealing lips (20, 22) is in the range from 0° to 30°, preferably in the range from 10° to 20°.

7. Use according to one of the preceding claims, wherein the sealing body (12) comprises as main constituent a TFE copolymer with a comonomer content of more than 0.5 wt.%, wherein the comonomer is preferably selected from a perfluoroalkyl vinyl ether, in particular perfluoromethyl vinyl ether, hexafluoropropylene and perfluoro-(2,2-dimethyl-1,3-dioxole).

8. Use according to claim 7, wherein the melt-processable perfluorinated thermoplastic is a melt-processable PTFE, a PFA, an MFA or an FEP.

9. Use according to one of the preceding claims, wherein the material of the sealing body (12) comprises 75 wt.% or more of the at least one melt-processable perfluorinated thermoplastic, and preferably is substantially completely formed from the at least one melt-processable perfluorinated thermoplastic.

10. Use according to one of claims 1 to 9, wherein the material of the sealing body (12) furthermore comprises one or more fillers, in particular pigments, friction-reducing additives and/or thermal resistance-raising additives.

11. Use according to one of the preceding claims, wherein the sealing ring (10) is produced by machining the sealing body (12) and subsequently inserting the spring element (14).

12. Use according to one of claims 1 to 10, wherein the sealing ring (10) is produced by injection-moulded encapsulation of the spring element (14) with the material of the sealing body (12).

13. Use according to one of the preceding claims, wherein the sealing ring (10) is mounted on a valve cylinder or on a valve piston of the pressure control valve.

14. Use according to claim 13, wherein the valve piston is electromagnetically movable in the valve cylinder.

## Revendications

1. Utilisation d'une bague d'étanchéité (10) dans une soupape de régulation de pression destinée à commander la pression d'admission dans un moteur à combustion interne pourvu d'un turbocompresseur, **caractérisée en ce que** la bague d'étanchéité (10) comprend les éléments suivants :
- un corps d'étanchéité (12) à symétrie de rotation par rapport à un axe de cylindre (16) et fait d'un matériau qui comporte en tant que constituant principal une ou plusieurs matières thermoplastiques entièrement fluorées pouvant être traitées par fusion, dans laquelle le corps d'étanchéité (12) comporte un profil en section transversale sensiblement en forme de U, pourvu d'une zone de crête (18) et de deux lèvres d'étanchéité (20, 22), qui s'étendent parallèlement l'une à l'autre à partir de la zone de crête (18) ou en formant un angle d'ouverture au moins approximativement en direction de l'axe de cylindre (16), et dans laquelle le corps d'étanchéité (12) présente une épaisseur de matériau de 0,15 à 0,6 mm ; et
- un élément ressort (14) en acier à symétrie de rotation par rapport à l'axe de cylindre (16) et présentant un profil en section transversale sensiblement en forme de U, dans laquelle l'élément ressort (14) est agencé entre les lèvres d'étanchéité (20, 22) du corps d'étanchéité (12) de manière à s'appliquer directement contre les surfaces (30, 32) desdites lèvres, se trouvant en regard l'une de l'autre.

2. Utilisation selon la revendication 1, dans laquelle le pressage des lèvres d'étanchéité (20, 22) contre des surfaces antagonistes dans la soupape de régulation de pression est dû uniquement à l'élément ressort (14) et non à une contrainte propre du corps d'étanchéité (12).

3. Utilisation selon la revendication 1 ou 2, dans laquelle la lèvre d'étanchéité intérieure (20) tournée vers l'axe de cylindre (16) présente une surface d'étanchéité intérieure (24) tournée vers l'axe de cylindre (16) et la lèvre d'étanchéité extérieure (22) opposée à l'axe de cylindre (16) présente une surface d'étanchéité extérieure (26) opposée à l'axe de cylindre (16), et dans laquelle , une fois la bague d'étanchéité (10) montée, l'une des surfaces d'étanchéité sert de surface d'étanchéité statique et l'autre de surface d'étanchéité dynamique.

4. Utilisation selon la revendication 3, dans laquelle le profil en section transversale du corps d'étanchéité (12) est conçu pour que la surface d'étanchéité intérieure (24) s'applique contre une surface antagoniste parallèle à l'axe de cylindre (16), sensiblement uniquement le long d'une ligne qui définit la périphérie intérieure (34) de la bague d'étanchéité (10).

5. Utilisation selon la revendication 3 ou 4, dans laquelle le profil en section transversale du corps d'étanchéité (12) est conçu pour que la surface d'étanchéité extérieure (26) s'applique contre une surface antagoniste parallèle à l'axe de cylindre (16), sensiblement uniquement le long d'une ligne qui définit la périphérie extérieure (36) de la bague d'étanchéité (10).

6. Utilisation selon l'une quelconque des revendications précédentes, dans laquelle l'angle d'ouverture entre les deux lèvres d'étanchéité (20, 22) se situe dans la plage de 0° à 30°, de préférence dans la plage de 10° à 20°.

7. Utilisation selon l'une quelconque des revendications précédentes, dans laquelle le corps d'étanchéité (12) comprend comme constituant principal un copolymère TFE présentant une part de comonomère supérieure à 0,5 % en poids, dans laquelle le comonomère est de préférence choisi parmi un éther perfluoroalkylvinylique, en particulier un éther perfluorométhylvinylique, un hexafluoropropylène et un perfluoro(2,2-diméthyl-1,3-dioxol).

8. Utilisation selon la revendication 7, dans laquelle la matière thermoplastique entièrement fluorée pouvant être traitée par fusion est un PTFE pouvant être traité par fusion, un PFA, un MFA ou un FEP.

9. Utilisation selon l'une quelconque des revendications précédentes, dans laquelle le matériau du corps d'étanchéité (12) comprend 75 % en masse ou plus de ladite au moins une matière thermoplastique entièrement fluorée pouvant être traitée par fusion, et est de préférence sensiblement entièrement fait de ladite au moins une matière thermoplastique entièrement fluorée pouvant être traitée par fusion.

10. Utilisation selon l'une quelconque des revendications 1 à 9, dans laquelle le matériau du corps d'étanchéité (12) comporte en outre une ou plusieurs charges, en particulier des pigments, des additifs réduisant le frottement et/ou des additifs augmentant la résistance thermique.

11. Utilisation selon l'une quelconque des revendications précédentes, dans laquelle la bague d'étanchéité (10) est produite par fabrication par enlèvement de copeaux du corps d'étanchéité (12) puis insertion de l'élément ressort (14).

12. Utilisation selon l'une quelconque des revendications 1 à 10, dans laquelle la bague d'étanchéité (10) est produite en surmoulant l'élément ressort (14) du matériau du corps d'étanchéité (12).

13. Utilisation selon l'une quelconque des revendications précédentes, dans laquelle la bague d'étanchéité (10) est fixée à un cylindre de soupape ou à un piston de soupape de la soupape de régulation de pression.

14. Utilisation selon la revendication 13, dans laquelle le piston de soupape peut être déplacé de manière électromagnétique dans le cylindre de soupape.
